# EUROPÄISCHE PATENTSCHRIFT

(11) **EP 1 290 626 B1**
(45) Veröffentlichungstag und Bekanntmachung des Hinweises auf die Patenterteilung: **28.07.2004**
(21) Anmeldenummer: 01947158.0
(22) Anmeldetag: 22.05.2001
(51) Int. Cl.: G06F 3/033, G06K 11/00

(54) **POSITIONIEREINHEIT**
POSITIONING UNIT
UNITE DE POSITIONNEMENT

(30) Priorität: 24.05.2000 DE 10025570
(43) Veröffentlichungstag der Anmeldung: 12.03.2003
(73) Patentinhaber: Infineon Technologies AG, 81669 München (DE)
(72) Erfinder: BUCHENRIEDER, Klaus, 85521 Riemerling (DE)
(74) Vertreter: Dokter, Eric-Michael
(86) Internationale Anmeldenummer: PCT/DE2001/001947
(87) Internationale Veröffentlichungsnummer: WO 2001/091042

(56) Entgegenhaltungen:
- EP-A- 1 100 042
- US-A- 5 574 479
- US-A- 5 627 565
- US-A- 5 796 387

## Beschreibung

Die Erfindung betrifft eine Positioniereinheit für eine Bewegung eines Objekts auf einer Darstellungsfläche.

Bei der Darstellungsfläche handelt es sich beispielsweise um einen Bildschirm oder um eine Projektionsleinwand. Der Einsatz der Projektsteuerung ist jedoch nicht auf eine bestimmte Gestalt der Darstellungseinheit beschränkt. Vielmehr ist es möglich, die Objektsteuerung bei verschiedenen zwei- oder dreidimensionalen Darstellungsmedien einzusetzen, beispielsweise auch in einem dreidimensionalen Projektionsraum.

Fernsehgeräte und Projektoren für Computer- oder Fernsehbilddarstellung werden zunehmend für Browseranwendungen verwendet. So ist es beispielsweise möglich, durch den von der Anmelderin vertriebenen Chip TDA6000 sowohl Videotextangebote als auch HTML-Seiten auf einem Fernsehschirm darzustellen.

Ein bekanntes Problem ist es, eine Positioniereinheit bereitzustellen, durch die ein Objekt, insbesondere ein Cursor, zu einer Navigation auf den dargestellten Seiten benutzt werden kann.

Die Bewegung der Fernbedienung erfolgt typischerweise aus dem Handgelenk heraus. Dabei muss der Cursor möglichst "natürlich" der Bewegung der Fernbedienung folgen. Die Bewegung des Cursors sollte idealerweise dem eines Lichtzeigers (Laserpointers) entsprechen. Die Bewegung gleicht daher dem eines imaginär projizierten Punktes. Bewegt man die Fernbedienung auf und ab, oder rotiert man diese zum Beispiel aus dem Handgelenk, so sollte sich der Cursor ebenfalls auf und ab bewegen. Eine leichte Verdrehung der Fernbedienung bei der Bewegung um die Längsachse (Rollachse) darf keinen Einfluss auf die Cursorpositionierung haben. Da jedoch bei der Bewegung eine Drehung um die Längsachse unvermeidbar ist, muss diese Rollkomponente eliminiert oder kompensiert werden.

Ein wichtiges Problem besteht darin, einen Cursor auf dem Schirm oder der Projektionsfläche in direkter Abhängigkeit der Bewegung einer Fernbedienung so zu bewegen, dass die Verschiebung des Cursors auf dem Schirm unabhängig von der Roll-Bewegung der Fernbedienung ist. Zur Cursorbewegung dürfen nur die Pitch- und Yaw-Bewegungen oder eine planparallele Verschiebung der Remote-Control beitragen. Weiterhin darf die Cursorkontrolle nur dann erfolgen, wenn die Fernbedienung tatsächlich auf den entsprechenden Fernseher oder eine entsprechende Projektionswand gerichtet ist.

Im unten dargestellten Beispiel soll der Cursor mit der Fernbedienung einfach nur von links nach rechts bewegt werden. Dabei tritt aber während der Bewegung eine Rotation um die Längsachse auf. Dies ist ganz normal. Die Rotation ist mit bisher verwendeten Kompensationen nur schwer in den Griff zu bekommen. Oftmals werden die Bewegungssensoren vor oder während einer Bewegung kalibriert und dann entsprechend kompensiert (vgl. Stand der Technik).

Die bekannten Lösungen zu diesem Problem konzentrieren sich hauptsächlich auf die Erfassung der Bewegung oder der Bewegungsrichtung der Fernbedienung. Meist werden die Kalibrationsschritte komplett weggelassen und die Rollbewegungen nicht kompensiert. Verschiedene Lösungen sind unanfällig gegen Rollbewegungen, ohne dass dem Problem aber besondere Aufmerksamkeit geschenkt wurde.

Eine gattungsgemäße Positioniereinheit ist aus der Europäischen Patentanmeldung EP 0 625 744 A1 bekannt. Hierbei erfolgt eine Festlegung eines Nullpunkts bei der Inbetriebnahme.

Wird der Navigationsmodus ausgewählt, so wird eine "Nullposition" der "Maus" ohne Rücksicht auf die tatsächliche Positionierung oder Orientierung im Raum angenommen. Jede weitere Bewegung wird dann erfasst und ausgehend von dieser "Nullposition" durch fortwährende Integration der Bewegungsdaten über Beschleunigungssensoren ermittelt. Diese bekannte Positioniereinheit ist in ihrem Betrieb jedoch sehr fehleranfällig.

Bei einer weiteren bekannten Positioniereinheit erfolgt eine Definition des Nullpunktes durch Drücken einer Taste: Die Fernbedienung oder Maus wird in beliebiger Lage im Raum gehalten. Durch Drücken einer Taste an der Maus oder am Empfangsgerät wird dann eine willkürliche "Nullposition" im Raum definiert. Alle weiteren Bewegungen im Raum werden daraufhin ausgehend von dieser "Nullposition" durch fortwährende Integration der Bewegungsdaten über Beschleunigungssensoren ermittelt (fehleranfällig). Dieses Verfahren wird oftmals ohne Bezug auf die Fernsehanwendung eingesetzt, zum Beispiel in der Robotik zum Bestimmen einer sogenannten "Nest-Position", in der die Ruhelage eines Roboterarms festgelegt wird.

Ferner ist eine modifizierte Computer-Maus bekannt, durch die eine optische Erfassung eines Leuchtpunktes, der direkt auf der Darstellungsfläche wiedergegeben ist, erfolgt. Die "Maus" besitzt eine lichtempfindliche Stelle, die kurz zur Erfassung der "Nullposition" im Raum an den Schirm gehalten wird. Es ist natürlich auch denkbar, einen beliebigen Punkt, zum Beispiel am Fernsehsessel, als Nullpunkt zu definieren und entsprechend technisch auszurüsten. Alle weiteren Bewegungen im Raum werden dann ausgehend von dieser "Nullposition" durch fortwährende Integration der Bewegungsdaten über Beschleunigungssensoren ermittelt.

Weitere bekannte Positioniereinheiten beinhalten eine Erfassung eines Leuchtelements, welches an der Fernbedienung angebracht ist.

Aus der US-Patentschrift 5 448 261 ist eine Positioniereinheit bekannt, bei der die Position eines Leuchtpunktes am Fernsehgerät zum Beispiel mit Hilfe einer CCD-Kamera erfasst und verfolgt wird. Durch Berechnung wird dann die Position der Fernbedienung bestimmt.

Ferner offenbart die Patentschrift US-A-5 627 565 ein System zum Erfassen von Koordinaten einer Bedieneinrichtung in einem Raum. Dieses System weist mindestens zwei Lichtquellen auf, die in der Frequenz identische und zueinander um 180° phasenversetzte Licht-Impulssignale ausgeben. Dieses Licht wird über eine Platte, die mindestens zwei Öffnungen aufweist, sodass das einfallende Licht an jeder Öffnung zu einem Lichtspot wird, auf einen Detektionsabschnitt geleitet, der für jede Öffnung einen entsprechenden Licht-Abtastabschnitt aufweist, mittels welchen mindestens zwei Licht-Abtastabschnitten eine Bewegung der Bedieneinrichtung in horizontaler (X-) Richtung bzw. in vertikaler (Y-) Richtung erfasst wird. Ferner ist ein System offenbart, bei dem von der Lichtquelle ein polarisiertes Licht abgegeben wird, und bei dem anstelle der Platte mit den Öffnungen vor jedem der zwei Licht-Abtastabschnitte jeweils ein Polarisationsfilter angeordnet ist, wobei die Polarisationsebenen der Filter senkrecht zueinander verlaufen und um 45° gegenüber der Horizontalen geneigt sind. Das auf die Licht-Abtastabschnitte einfallende Licht wird jeweils in Strom umgewandelt, dieser wiederum in eine Spannung umgewandelt, die dann über ein Bandpassfilter, einen Verstärker, einen Detektor sowie einen A/D-Wandler zu einer digitalen Betriebseinheit übertragen wird, die dann die Position und die Neigung der Bedieneinheit ermittelt.

Ferner ist eine Strahlungsquelle bekannt, die so gestaltet ist, dass je nach Winkel zum Fernsehschirm die vier, um den Schirm herum angeordneten, Empfänger verschieden stark beleuchtet werden. Aus der Verteilung der Beleuchtungsstärke (variante Strahlungsenergie) wird dann die Ausrichtung der Fernbedienung auf den Schirm bestimmt.

Linien-, Muster oder Menüpunkte werden auf der Fernseherseite dargestellt und in der FB ausgewertet:

In der Fernbedienung oder Maus befindet sich eine fotoempfindliche Stelle (Array aus Zellen) oder ein Pixelarray.

Man bringt über eine Optik das Projekt in Deckung mit dem Sensor, vgl: EP 355172 A.

Von einem "Kasten" in der Nähe der Bildröhre wird ein "Bild" ausgesendet. Dieses Bild wird von einem Pixelsensor aufgenommen, und die Position des Abbilds zur Sensormitte ergibt die xy-Koordinate vgl. US 5644126 A.

Bei Erfassung des Objekts wird dieses dann gegebenenfalls verschoben. Sofern man sich auf das System eingestellt hat, ist der Umgang damit recht einfach. Die Lernphase ist jedoch etwas lästig, und die Parameter sind für jeden Benutzer neu einzustellen.

Punkte, Linien oder Muster werden auf den Fernseher projiziert:

Koike et. al. bestimmen die Position über einen Leuchtpunkt am Ende der Fernbedienung (Leuchtdiode) vgl. US 5448261 A. Im Fernseher sind eine CCD-Kamera und eine Auswertelogik eingebaut, mit der die Position der gepulsten Lichtquelle bestimmt wird.

Levine und Schappert schlagen in EP 721169 A vor, auf die Fernbedienung drei punktförmige Leuchtquellen (Leuchtdioden) zu montieren. Diese zeigen in leicht unterschiedliche Richtungen, und die Leuchtintensität der jeweiligen Diode nimmt mit dem Winkel ab. Nichtlinearitäten werden durch Filter ausgeglichen. Die Leuchtdioden blinken in einem festgelegten Rhythmus. Der Detektor im Fernsehgerät kann daraus den Winkel der Fernbedienung zum Fernsehgerät genau bestimmen.

Steinhäuser gibt in DE 19620332 A ein Verfahren an, mit dem von der Hand-Held-Unit ein Muster auf den Fernseher projiziert und im Fernseher ausgewertet wird. Je nach Auswerteprogramm und Muster kann die Cursorbewegung sehr exakt durchgeführt werden.

Infrarot oder Ultraschallgeber z.B. in den Ecken des Bildschirms:

Diese Geber werden sowohl zur Positionsbestimmung oder auch zur Festlegung der "Nullposition" benutzt, vgl. DE 19701374 A oder WO 9307711 A usw. Diese Verfahren sind zwar kostengünstig, aber auch ungenau. Zur Festlegung der "Nullposition" kann aber nur im besten Fall ein Punkt im Raum vermessen werden. Mit einem System lässt sich die Position im Raum, aber nicht die räumliche Orientierung der zum Beispiel stabförmigen Fernbedienung im Raum oder gar eine Rotationsorientierung um die Längsachse ermitteln.

### Phasendifferenzverfahren:

Ferner ist es bekannt, mehrere Signalempfänger um den Bildschirm herum anzuordnen und die Fernbedienung mit zum Beispiel einem Pulssender auszurüsten. Aus der Phasendifferenz der empfangenen Signale lässt sich dann die Position berechnen. Logischerweise lässt sich die Position im Raum, aber nicht die räumliche Orientierung der zum Beispiel stabförmigen Fernbedienung im Raum oder gar eine Rotationsorientierung um die Längsachse ermitteln.

Eine Phasendifferenzmethode, basierend auf elektromagnetischen Wellen, ist im kanadischen Patent-Dokument Nr. 1301279 angegeben. Aus der Beschreibung kann ich jedoch nicht viel ersehen. Das Verfahren steht aber sicherlich nicht in Konkurrenz zum dargestellten Verfahren.

### Koordinierung durch ein künstliches Magnetfeld:

Lenssen und Martens erzeugen ein Magnetfeld und kalibrieren mit einem "Giant Magneto Resistive Sensor", vgl. WO 9715880 A. Das hierbei eingesetzte Verfahren ist sehr aufwendig.

### Koordinierung im Erdmagnetfeld

In der Patentanmeldung WO 9727575 A von Faulkner und Hall werden drei im rechten Winkel angeordnete Hall-Sensoren zur direkten Erfassung der Orientierung und Bewegung der "Maus" im Erdmagnetfeld verwendet. Dieses Produkt ist eine gute Lösung, solange man damit dem Großbildfernseher und seinem Magnetfeld nicht zu nahe kommt.

### Nutzung der Schwerkraft:

Eine Sensorik in der "Maus" ist mit einem "Gewicht" verbunden. Die Bewegung und Grundorientierung wird davon direkt abgeleitet. Wird nur der "Gravitationsvektor" benutzt, werden aber Bewegungen in der Horizontalen nicht erfasst. Auch ruckartige Bewegungen führen zu Störungen. Vermutlich verbindet Suzuki die Potentiometer in GB 2276261 A mit Gewichten, weil für derartige Aufbauten häufig der Joystick aus einer Fernsteuerung umgedreht eingebaut und das Knüppelende mit etwa 100 Gramm beschwert wird. Dies stellt eine wenig bedienungsfreundliche Lösung dar.

Der Erfindung liegt die Aufgabe zugrunde, eine Positioniereinheit zu schaffen, die eine einfach durchzuführende Bewegung eines Objekts auf einer Darstellungsfläche ermöglicht.

Erfindungsgemäß wird die Aufgabe dadurch gelöst, dass die Positioniereinheit Mittel zur Erfassung einer Rollbewegung und einer Orientierung der Positioniereinheit und wenigstens zwei voneinander verschieden polarisierte Lichtquellen aufweist, wobei die unterschiedlich polarisierten Lichtquellen pulsmoduliert betrieben werden und die Pulsmodulationen der unterschiedlich polarisierten Lichtquellen eine voneinander verschiedene Frequenz aufweisen.
Die Positioniereinheit ist so ausgestaltet, dass sie wenigstens zwei voneinander verschieden polarisierte Lichtquellen enthält.

Dies hat den Vorteil, dass die Streckendämpfung und die Rotationskomponente exakt bestimmt werden können.

Hierbei ist es besonders zweckmäßig, dass die unterschiedlich polarisierten Lichtquellen pulsmoduliert betrieben werden.

Neben den Beschleunigungssensoren werden zusätzlich sowohl die Rollbewegung als auch die Orientierung der Fernbedienung .optisch erfasst. Hierzu werden zwei unterschiedlich polarisierte Leuchtquellen so pulsmoduliert, dass man die Streckendämpfung ermitteln und die Rotationskomponente exakt bestimmen kann. Die Pulsquellen und den Empfänger ordnet man am Fernsehgerät (Leinwand eines Beamers usw.) und in der Fernbedienung an. Dadurch wird über den "Sichtkontakt" die Ausrichtung der Fernbedienung auf die entsprechende Bildfläche sichergestellt. Die optische Sendeeinrichtung kann sowohl im Fernsehgerät als auch in der Fernbedienung untergebracht sein.

Weitere Vorteile, Besonderheiten und zweckmäßige Weiterbildungen der Erfindung ergeben sich aus den Unteransprüchen und der nachfolgenden Darstellung eines bevorzugten Ausführungsbeispiels anhand der Zeichnung.

### Von den Zeichnungen zeigt

Fig. 1 ein Schnittbild einer erfindungsgemäß gestalteten Fernbedienung,
Fig. 2 eine schematische Darstellung zur Verdeutlichung des Einsatzes von zwei verschiedenen polarisierten Lichtquellen,
Fig. 3 Summensignale und Einzelsignale für verschiedene Drehwinkel der Positioniereinheit und
Fig. 4 einen Ausschnitt aus in Fig. 3 dargestellten Signalfolgen mit Erläuterungen der darin auftretenden Komponenten.

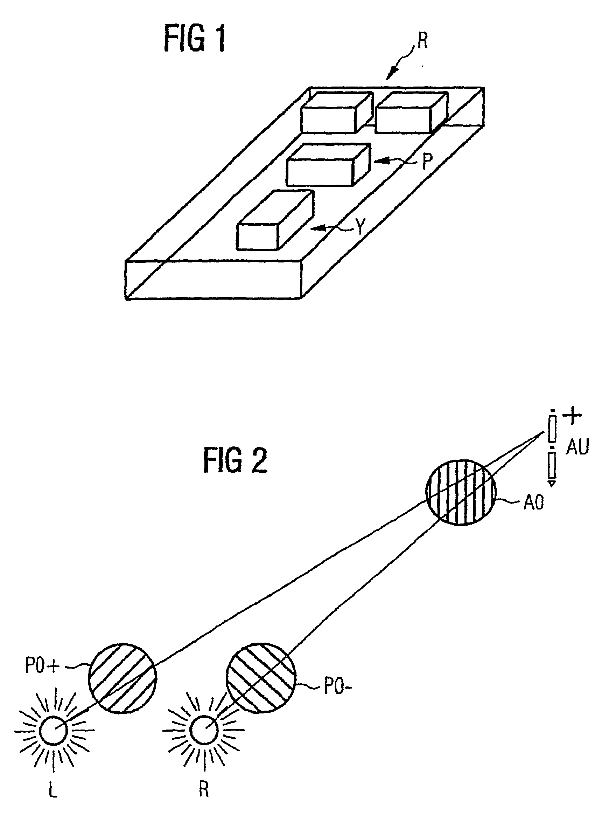

In Fig. 1 ist das Schnittbild einer Fernbedienung mit der Sendeeinrichtung in der Fernbedienung gezeigt. Das Roll-System besteht aus zwei Leuchtquellen ("Links" und "Rechts") sowie das Pitch- und Yaw-System aus zwei um 90 Grad versetzt angeordneten Beschleunigungssensoren.

Eine bevorzugte Funktionsweise der Positioniereinheit ist in Fig. 2 in einer Prinzipskizze dargestellt.

Zur Ermittlung der Rollkomponente werden zwei polarisierte, gepulste Lichtquellen und eine Empfangseinrichtung mit polarisiertem Filter verwendet. Die Polarisationswinkel der einzelnen Filter sind unterschiedlich. Der Ausgang des Empfängers gibt die gemessene Intensität nach dem polarisierten Analysefilter analog zur Weiterverarbeitung an. Aus den relativen Amplitudenwerten der empfangenen Pulse können dann Streckendämpfung, Fremdlichtanteil und Rotationswinkel bestimmt werden.

Wird die Sendeeinrichtung gegenüber der Empfangseinrichtung verdreht, so ändert sich die gemessene Intensität bezüglich der jeweiligen Quelle "Links" beziehungsweise "Rechts". Die Quellen werden wechselseitig gemäß einer bestimmten Pulsfolge betrieben, so dass man die Drehung nach "Links" von der nach "Rechts" unterscheiden kann. Aus der Höhe der empfangenen Impulse lassen sich die Drehrichtung und der Rotationswinkel (plus/minus 45 Grad von der Horizontalen aus gemessen) direkt ableiten. Das analoge Empfangssignal steht am "Ausgang" zur Verfügung.

Zur Bestimmung der Rollkomponente sind die Lichtsender "Links" und "Rechts" nebeneinander angeordnet und geben Licht jeweils über einen Polarisationsfilter gebündelt ab. Zur Bündelung vor der Polarisation verwendet man eine entsprechende Optik. Hält man die Fernbedienung nun in Richtung Fernsehgerät, so treffen die polarisierten Lichtstrahlen auf den Empfänger auf. Die Simulationsgraphik zeigt die Fernbedienung (als Linie mit kleiner Markierung für die Oberseite) in verschiedenen Rotationslagen von -45 Grad bis +45 Grad. Darunter ist die Kurvenform des Signals am Ausgang des Empfängers gezeigt. Dieses Signal ist die mit einer Konstanten multiplizierte Summe der anteiligen Einzelhelligkeiten der Pulse "Links" und "Rechts". Die Beiträge der Einzelhelligkeiten hängen dabei direkt vom Rotationswinkel ab.

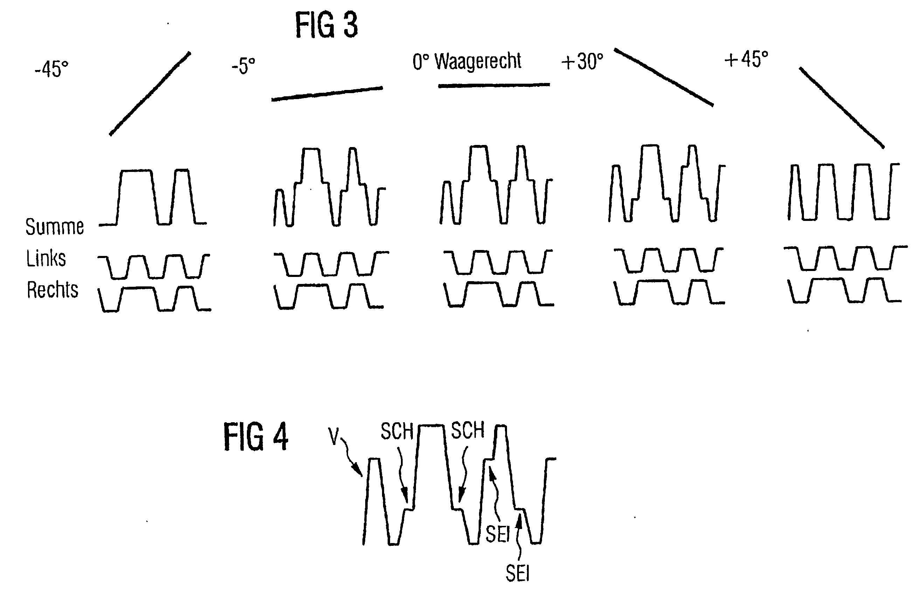

Beide Lichtquellen werden gemäß den in Fig. 3 und Fig. 4 dargestellten Zeitdiagrammen ("Links", "Rechts") gepulst geschaltet. Die Pulssequenz enthält die vier Zustände (00, 01, 10, 11).

Im Zustand (00) sind beide Quellen dunkel, die Empfänger ermitteln den Beleuchtungsgrundwert. Ein Vergleich mit einem Referenzwert im Empfänger liefert den Ausgangswert. Zu bemerken ist, dass die Pulsfolge so konstruiert ist, dass alle drei "Nullwerte" im Ausgangssignal gleich sind. Werden unterschiedliche Werte für den Nullpegel gemessen, so liegt eine Streulichtquelle vor, die durch Mittelwertbildung eliminiert werden kann. Durch Tiefpassfilterung und Anbindung des gefilterten Ausgangssignals an eine PLL (Phase Locked Loop) lässt sich der systeminhärente Takt der Sendeeinrichtung wiedergewinnen (Synchronisation Sender/Empfänger). Damit lassen sich dann eindeutig die Zeitpunkte der "Nullwerte" bestimmen. Dies ist wichtig, da in batteriebetriebenen Sendern mit nachlassender Batteriespannung möglicherweise Änderungen der Taktfrequenz auftreten können.

Im Zustand (11) sind beide Quellen eingeschaltet, und man ermittelt die "Streckendämpfung". Daraus ermittelt man die Helligkeitskalibrierung für die Empfänger. Für die Taktung und den Zeitpunkt des "Maximalwerts" vgl. oben.

In den Zuständen (01), (10) wird jeweils nur eine Quelle zur Helligkeits- und damit Winkelermittlung eingeschaltet. Da die Helligkeit von polarisiertem Licht nach dem Empfangspolarisationsfilter vom Drehwinkel, also von der Rotation der Fernbedienung abhängt, lässt sich der Rotationswinkel aus der gemessenen Einzelhelligkeit des "Vorpulses" und der "Schalterpulse" bestimmen. Die Höhe des Vorpulses ohne Fremdlicht ist proportional zum Drehwinkel. Die Drehrichtung ergibt sich unmittelbar aus der Lage der Seitenpulse.

Korrigiert man nun die durch die Beschleunigungssensoren ermittelten Bewegungswerte mit dem gemessenen Rotationswinkel, so werden Pitch und Yaw unabhängig von der Rollbewegung.

Die Erfindung beinhaltet ein einfaches Referenzsystem mit einer Empfangseinrichtung zur Ermittlung des störenden Rollwinkels, Bestimmung von Beleuchtungsgrundwert, Helligkeitskalibrierung und Streulicht.

Die Erfindung vereint eine Beschleunigungssensorbasis mit einem unabhängigen optischen Referenzsystem zur Ermittlung und gesonderten Kompensation der Rollbewegung.

Zur Demonstration der Beschleunigungssensorik wird eine einfache Simulation mit einem Mikroprozessorboard und einem Beschleunigungssensor aufgebaut. Bewegt man den Sensor um eine Achse, so wandert im Display eine Marke proportional zum Winkel nach oben oder nach unten. Die Integration der Beschleunigungswerte erfolgt in Software. Das System kompensiert die Rollbewegung nicht und demonstriert den gegenwärtig besten Stand der Technik.

Zum Nachweis der vorgeschlagenen Rollwinkelerfassung wurde mit zwei Leuchtdioden, einem Fotowiderstand und den Filterfolien aus einer Kinobrille eine "verdrehbare" Strecke aufgebaut. Schaltet man nun die Dioden, so lassen sich mittels Oszilloskop die entsprechenden Kurven darstellen.

## Patentansprüche

1. Positioniereinheit für eine Bewegung eines Objekts auf einer Darstellungsfläche, aufweisend:
Mittel zur Erfassung einer Rollbewegung und einer Orientierung der Positioniereinheit, und
wenigstens zwei voneinander verschieden polarisierte Lichtquellen, **dadurch gekennzeichnet, dass**
die unterschiedlich polarisierten Lichtquellen pulsmoduliert betrieben werden und
die Pulsmodulationen der unterschiedlich polarisierten Lichtquellen eine voneinander verschiedene Frequenz aufweisen.

## Claims

1. A positioning unit for movement of an object on a presentation area, comprising:
means for detecting a rolling movement and an orientation of the positioning unit, and
at least two light sources which are polarized differently from one another,
**characterized in that**
the differently polarized light sources are operated in a pulse-modulated manner and
the pulse modulations of the differently polarized light sources have a frequency which differs from one another.

## Revendications

1. Unité de positionnement pour le déplacement d'un objet sur une surface de représentation, comprenant:
des moyens pour détecter un mouvement de roulement et une orientation de l'unité de positionnement, et une orientation de l'unité de positionnement, et au moins deux sources de lumière polarisées différemment l'une de l'autre,
**caractérisée en ce que**
les sources de lumière polarisées différemment fonctionnent d'une manière modulée selon une modulation d'impulsions et les modulations par impulsions des sources de lumière polarisées différemment possèdent des fréquences qui diffèrent l'une de l'autre.
